# EUROPEAN PATENT APPLICATION

(11) **EP 2 535 551 A1**
(43) Date of publication of application: **19.12.2012**
(21) Application number: 10845728.4
(22) Date of filing: 10.02.2010
(51) Int. Cl.: F02M 35/10, F01M 13/00

(54) **INTERNAL COMBUSTION ENGINE**

(71) Applicant: Toyota Jidosha Kabushiki Kaisha, Toyota-shi, Aichi 471-8571 (JP)
(72) Inventor: OKADA, Yoshihiro, Toyota-shi Aichi 471-8571 (JP)
(74) Representative: TBK
(86) International application number: PCT/JP2010/051977
(87) International publication number: WO 2011/099127

(57) **Abstract**

The present invention has an object to provide an internal combustion engine in which abnormal combustion accompanying inflow of oil hardly occurs. For this purpose, in one mode of the present invention, the internal combustion engine includes a plurality of cylinders disposed along a flow of cooling water, and a surge tank having a plurality of air outlet ports connecting to the respective cylinders, wherein the surge tank is formed so that relatively much oil accumulates in a vicinity of an air outlet port connecting to a cylinder which is located at an upstream side of the flow of the cooling water, and accumulation of the oil is relatively small in a vicinity of an air outlet port connecting to a cylinder which is located at a downstream side of the flow of the cooling water.

## Description

### Technical Field

The present invention relates to an internal combustion engine, and more particularly to an internal combustion engine having a surge tank.

### Background Art

It is known that in an internal combustion engine for an automobile, oil accumulates in a surge tank thereof. The oil is the result of the oil mist contained in a blowby gas adhering to the wall surface of the surge tank. When the oil accumulating in the surge tank flows into a cylinder in large amounts at one time, abnormal combustion may occur in the cylinder. Especially in a low-rotation and high-load region, the oil flowing into a cylinder spontaneously ignites before flame propagation arrives during a compression stroke or after ignition, and thereby, serious events such as preignition and heavy knocking occur.

In regard with the problem as described above, in the prior art disclosed in Japanese Patent Application Laid-Open No. 9-236054, the surge tank is provided with a recessed portion in which oil accumulates, and an oil discharge hose is connected to the recessed portion. The oil discharge hose is provided with an opening/closing valve. The opening/closing valve is connected to an intake manifold via a diaphragm, and the valve is closed by the operation of the diaphragm by intake negative pressure at the time of operation of an internal combustion engine, and is opened at the time of stop of the internal combustion engine. More specifically, the prior art prevents inflow of oil into the cylinders by discharging the oil accumulating in the surge tank to outside.

However, in the above described prior art, the opportunity to discharge the oil to outside is limited to the time of stoppage of the internal combustion engine. Therefore, when the internal combustion engine continues to operate for a long time, the amount of the oil in the surge tank increases, and oil may eventually flow into the cylinders. It is not easy in reality to prevent inflow of the oil completely when the cost effectiveness is taken into consideration.

### Summary of Invention

In view of the task of suppressing the occurrence of abnormal combustion, it is not always necessary to prevent inflow of the oil into the cylinders. Even if the oil flows into the cylinders from the surge tank, the occurrence of abnormal combustion can be avoided unless the conditions in the cylinders satisfy the conditions of the occurrence of abnormal combustion. The in-cylinder conditions mentioned here are, for example, a wall surface temperature, a residual gas composition and the like, and the in-cylinder conditions may vary among the cylinders. Therefore, all the cylinders are not always the same in respect of proneness to abnormal combustion by inflow of the oil, and some cylinders are relatively less prone to abnormal combustion while other cylinders are relatively prone to abnormal combustion.

On the basis of the assumption that inflow of the oil into the cylinders from the surge tank is unavoidable, it is conceivable if a certain degree of the oil inflow is permitted for the cylinder in which abnormal combustion is less prone to occur, while inflow of the oil is decreased in the cylinders in which abnormal combustion easily occurs, abnormal combustion can be prevented from unduly occurring to a specific cylinder, and occurrence of abnormal combustion can be made difficult as the entire internal combustion engine. The present invention is the invention which is made based on the idea like this, and has an object to provide an internal combustion engine in which abnormal combustion accompanying inflow of oil hardly occurs.

According to a first mode of the present invention, the internal combustion engine includes a plurality of cylinders having a difference in in-cylinder wall surface temperatures among the cylinders, and a surge tank having a plurality of air outlet ports connecting to the respective cylinders. The surge tank is formed so that relatively much oil accumulates in a vicinity of an air outlet port connecting to a cylinder in which an in-cylinder wall surface temperature is relatively low, and accumulation of the oil is relatively small in a vicinity of an air outlet port connecting to a cylinder in which an in-cylinder wall surface temperature is relatively high.

According to a second mode of the present invention, the internal combustion engine includes a plurality of cylinders disposed along a flow of cooling water, and a surge tank having a plurality of air outlet ports connecting to the respective cylinders. The surge tank is formed so that relatively much oil accumulates in a vicinity of an air outlet port connecting to a cylinder located at an upstream side of the flow of the cooling water, and accumulation of the oil is relatively small in a vicinity of an air outlet port connecting to a cylinder located at a downstream side of the flow of the cooling water.

According to a third mode of the present invention, the internal combustion engine includes a plurality of cylinders with a difference occurring in residual gas amounts among the cylinders, and a surge tank having a plurality of air outlet ports connecting to the respective cylinders. The surge tank is formed so that relatively much oil accumulates in a vicinity of an air outlet port connecting to a cylinder in which a residual gas amount is relatively small, and accumulation of the oil is relatively small in a vicinity of an air outlet port connecting to a cylinder in which a residual gas amount is relatively large.

According to a fourth mode of the present invention, the internal combustion engine includes a plurality of cylinders having a difference in back pressure among the cylinders, and a surge tank having a plurality of air outlet ports connecting to the respective cylinders. The surge tank is formed so that relatively much oil accumulates in a vicinity of an air outlet port connecting to a cylinder in which back pressure is relatively low, and accumulation of oil is relatively small in a vicinity of an air outlet port connecting to a cylinder in which back pressure is relatively high.

The cylinder in which the in-cylinder wall surface temperature is relatively high, the cylinder which is located at the downstream side of the flow of the cooling water, the cylinder in which the residual gas amount is relatively large, or the cylinder in which the back pressure is relatively high is the cylinder in which abnormal combustion easily occurs with inflow of the oil. Proneness of the oil to flow into a cylinder from the surge tank depends on the amount of the oil accumulating in the vicinity of the air outlet port. As the amount of the oil accumulating is larger, the oil flows into the cylinder more easily, and as the amount of the oil accumulating is smaller, the oil is less prone to flow into the cylinder. According to each of the modes of the present invention, oil is relatively difficult to accumulate in the vicinity of the air outlet port connecting to the cylinder in which abnormal combustion is relatively easily occurs. Therefore, abnormal combustion can be prevented from unduly occurring to a specific cylinder, and the probability of occurrence of abnormal combustion as the entire internal combustion engine can be suppressed to be low.

### Brief Description of Drawings

[Figure 1] Figure 1 is a view showing a configuration of a feature part of an internal combustion engine of a first embodiment of the present invention.
[Figure 2] Figure 2 is a view showing an A-A section of Figure 1.
[Figure 3] Figure 3 is a view showing a whole of an internal combustion engine of a second embodiment of the present invention.
[Figure 4] Figure 4 is a view showing a configuration of a feature part of the internal combustion engine of the second embodiment of the present invention.

### Description of Embodiments

### Embodiment 1

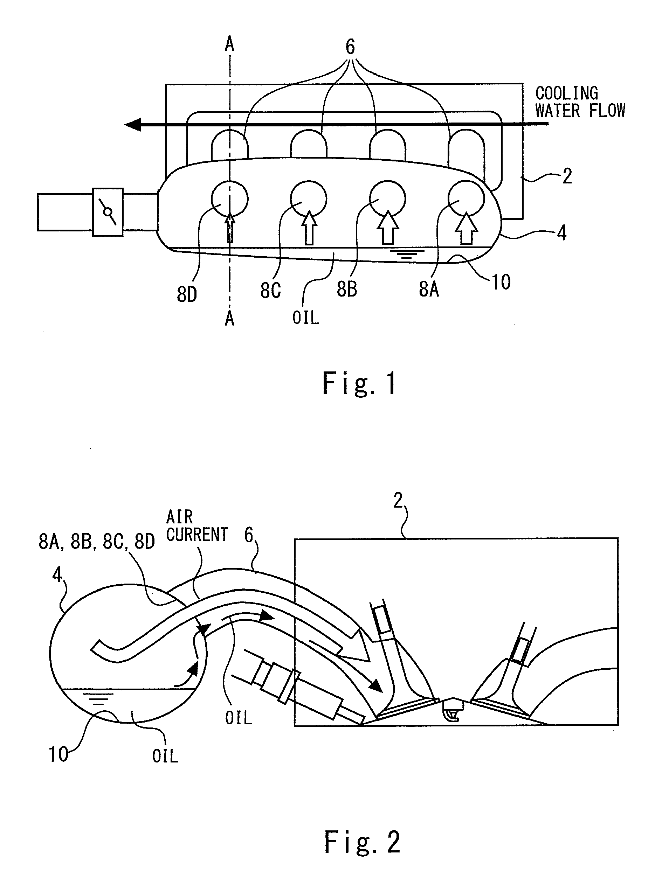

Hereinafter, embodiment 1 of the present invention will be described with reference to Figure 1 and Figure 2.

Figure 1 is a view showing a configuration of a feature part of an internal combustion engine of the present embodiment. Figure 2 is a view showing an A-A section of Figure 1. The internal combustion engine according to the present embodiment is a spark ignition type four-stroke reciprocal engine. Further, the internal combustion engine is also an in-line four-cylinder engine including four cylinders in series. Therefore, a cylinder head 2 and a surge tank 4 are connected by four intake branch pipes 6.

Air outlet ports 8A, 8B, 8C and 8D are formed in connecting portions of the surge tank 4 to the respective intake branch pipes 6. The air outlet ports 8A, 8B, 8C and 8D are formed at an upper half side of the surge tank 4. This is to prevent oil from flowing out from the air outlet ports 8A, 8B, 8C and 8D, because the oil accumulates in a bottom portion 10 of the surge tank 4. Inclination is given to the bottom portion 10 of the surge tank 4. More accurately, the surge tank 4 is formed into such a shape that the bottom portion 10 thereof inclines at the time of the internal combustion engine being mounted on a vehicle.

The shape of the bottom portion 10 of the surge tank 4 is related to the flowing direction of cooling water in the cylinder head 2. A cooling water path not illustrated is formed inside the cylinder head 2, and the four cylinders are disposed to be along the flow of the cooling water. In Figure 1, the cylinder connected to the air outlet port 8A is located the most upstream of the flow of the cooling water, the cylinder connected to the air outlet port 8B, the cylinder connected to the air outlet port 8C, and the cylinder connected to the air outlet port 8D are arranged side by side along the flow of the cooling water in this sequence. The bottom portion 10 of the surge tank 4 is formed to be gradually deeper from the side of the air outlet port 8D corresponding to the most downstream side of the flow of the cooling water toward the side of the air outlet port 8A corresponding to the most upstream side of the flow of the cooling water. By the shape like this, the oil which flows into the surge tank 4 accumulates in the vicinity of the air outlet port 8A in the largest amount, and as for the rest, the amount of the accumulating oil decrease in the sequence of the vicinity of the air outlet port 8D, the vicinity of the air outlet port 8C, and the vicinity of the air outlet port 8B.

The oil accumulating in the bottom portion 10 of the surge tank 4 flows out from the air outlet ports 8A, 8B, 8C and 8D with the air current which heads for the inside of the cylinders from the surge tank 4, as shown in Figure 2. The oil flows into the cylinder, whereby abnormal combustion accompanied by the events such as preignition and heavy knocking sometimes occurs. However, according to the shape of the bottom portion 10 of the surge tank 4 adopted by the internal combustion engine of the present embodiment, the probability of occurrence of abnormal combustion is suppressed to be low for the following reason.

The probability of occurrence of abnormal combustion by inflow of the oil has a strong correlation with the inflow amount of the oil into the cylinder and the wall surface temperature of the inside of the cylinder. If the in-cylinder wall surface temperatures are the same, the larger the inflow amount of the oil, the higher the probability of occurrence of abnormal combustion, and if the inflow amounts of the oil are the same, the higher the in-cylinder wall surface temperature, the higher the probability of occurrence of abnormal combustion. Here, the temperature of the cooling water significantly influences the in-cylinder wall surface temperature. If the temperature of the cooling water is relatively low, the in-cylinder wall surface temperature becomes relatively low, and if the temperature of the cooling water becomes relatively high, the in-cylinder wall surface temperature also becomes relatively high. Accordingly, in Figure 1, the in-cylinder wall surface temperature of the cylinder which is located at the upstream side of the flow of the cooling water is relatively low, whereas the in-cylinder wall surface temperature of the cylinder which is located at the downstream side of the flow of the cooling water is relatively high.

Meanwhile, the inflow amount of the oil into the cylinder is determined by the amount of the oil which accumulates in the vicinities of the air outlet ports 8A, 8B, 8C and 8D in the surge tank 4. As the amount of the accumulating oil is larger, the oil flows into the cylinder from the surge tank 4 more easily. Consequently, according to the way of accumulation of the oil shown in Figure 1, the inflow amount of the oil into the cylinder connecting to the air outlet port 8A is the largest, and as for the rest, the inflow amounts of the oil are suppressed to be small in the sequence of the cylinder connecting to the air outlet port 8B, the cylinder connecting to the air outlet port 8C, and the cylinder connecting to the air outlet port 8D. More specifically, the cylinder having a higher in-cylinder wall surface temperature has the inflow amount of the oil suppressed to be smaller.

As described above, according to the shape of the bottom portion 10 of the surge tank 4 of the present embodiment, relatively much oil is accumulated in the vicinity of the air outlet port connecting to the cylinder in which the in-cylinder wall surface temperature is relatively low, and accumulation of oil can be relatively made small in the vicinity of the air outlet port connected to the cylinder in which the in-cylinder wall surface temperature is relatively high. Thereby, inflow of the oil is permitted to the cylinder in which the in-cylinder wall surface temperature is relatively low, while inflow of the oil to the cylinder in which the in-flow wall surface temperature is relatively high can be suppressed. Therefore, abnormal combustion can be prevented from unduly occurring to a specific cylinder, and the probability of occurrence of abnormal combustion as the entire internal combustion engine can be suppressed to be low.

### Embodiment 2

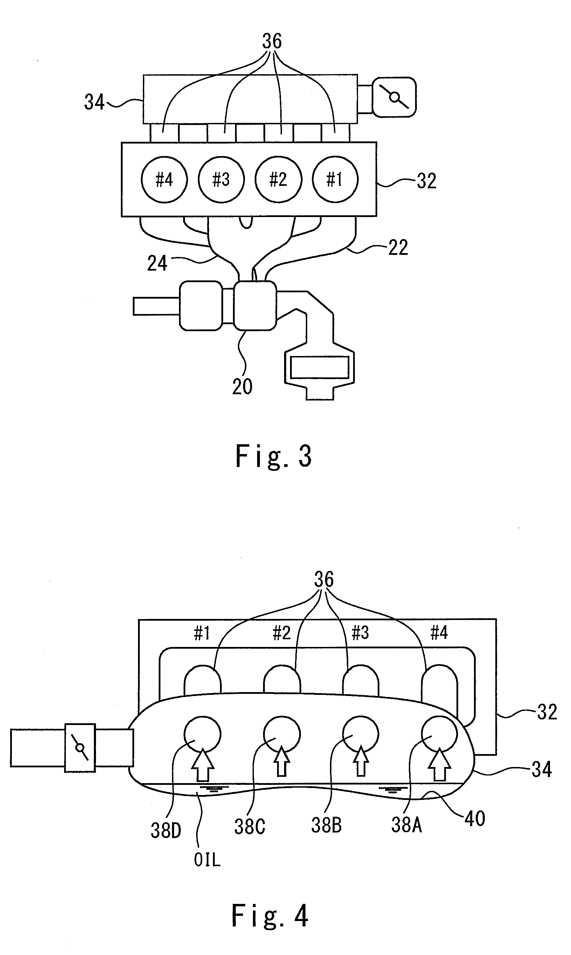

Hereinafter, embodiment 2 of the present invention will be described with reference to Figure 3 and Figure 4.

Figure 3 is a schematic view showing a whole of an internal combustion engine of the present embodiment. The internal combustion engine according to the present embodiment is a spark ignition type four stroke reciprocal engine, and is also an in-line four-cylinder engine including four cylinders in series. Furthermore, the internal combustion engine according to the present embodiment is also a turbo engine including a turbo super charger 20. The turbo super charger 20 is a so-called twin scroll turbo, and an exhaust system connected to a turbine portion thereof is divided into two systems. More specifically, an exhaust system 22 which gathers exhaust gas of a first cylinder (#1) and exhaust gas of a fourth cylinder (#4), and an exhaust system 24 which gathers exhaust gas of a second cylinder (#2) and an exhaust gas of a third cylinder (#3) are independently provided. There is a pressure difference between the two exhaust systems 22 and 24, and as a result of which, a difference in back pressure occurs among the cylinders. In this case, the first and the fourth cylinders which are connected to the exhaust system 22 are set as low back pressure cylinders, and the second and the third cylinders which are connected to the exhaust system 24 are set as high back pressure cylinders.

A surge tank 34 is connected to a cylinder head 32 by four intake branch pipes 36 which are provided at respective cylinders. The feature of the internal combustion engine of the present embodiment lies in the shape of the surge tank 34, and the detail thereof is as shown in Figure 4.

Air outlet ports 38A, 38B, 38C and 38D are formed in connecting portions of the surge tank 34 to the respective intake branch pipes 36. The air outlet ports 38A, 38B, 38C and 38D are formed at an upper half side of the surge tank 34. This is to prevent oil from flowing out from the air outlet ports 38A, 38B, 38C and 38D, because the oil accumulates in a bottom portion 40 of the surge tank 34.

A shape of the bottom portion 40 of the surge tank 34 is related with the back pressure of the cylinders to which the respective air outlet ports 38A, 38B, 38C and 38D are connected. Regions in the vicinities of the air outlet ports 8B and 8C which are connected to the high back pressure cylinders (#2 and #3) are formed to be relatively shallow, and regions in the vicinities of the air outlet ports 8A and 8D connected to the low back pressure cylinders (#1 and #4) are formed to be relatively deep. According to the shape like this, much of the oil which flows into the surge tank 34 accumulates in the vicinities of the air outlet ports 8A and 8D, and less oil accumulates in the vicinities of the air outlet ports 8A and 8D.

The oil which accumulates in the bottom portion 40 of the surge tank 34 flows out from the air outlet ports 38A, 38B, 38C and 38D with an air current heading for an inside of the cylinder from the surge tank 34. The oil flows into the cylinders, whereby abnormal combustion accompanied by preignition and heavy knocking sometimes occurs. However, according to the shape of the bottom portion 40 of the surge tank 34 adopted by the internal combustion engine of the present embodiment, the probability of occurrence of abnormal combustion is suppressed to be low for the following reason.

The probability of occurrence of abnormal combustion by inflow of the oil has a strong correlation with the inflow amount of the oil into the cylinder and a residual gas amount inside the cylinder. If the residual gas amounts are the same, the larger the inflow amount of oil, the higher the probability of occurrence of abnormal combustion, and if the inflow amounts of the oil are the same, the larger the residual gas amount, the higher the probability of occurrence of abnormal combustion. Here, the back pressure significantly influences the residual gas amount. If the back pressure is relatively low, the residual gas amount becomes relatively small, and if the back pressure becomes relatively high, the residual gas amount also becomes relatively large. Accordingly, in Figure 4, the residual gas amounts of the first and the fourth cylinders are relatively small, and the residual gas amounts of the second and the third cylinders are relatively large.

Meanwhile, the inflow amount of the oil into the cylinder is determined by the amount of the oil which accumulates in the vicinities of the air outlet ports 38A, 38B, 38C and 38D inside the surge tank 4. As the amount of the accumulating oil is larger, the oil flows into the cylinder from the surge tank 34 more easily. Consequently, according to the way of accumulation of the oil shown in Figure 1, the inflow amounts of the oil to the respective cylinders connected to the air outlet ports 38A and 38D are large, but the inflow amounts of the oil to the respective cylinders connected to the air outlet ports 38B and 38C are suppressed to be small.

As described above, according to the shape of the bottom portion 40 of the surge tank 34 of the present embodiment, relatively much oil is accumulated in the vicinity of the air outlet port connected to the cylinder having a relatively small residual gas amount, and accumulation of the oil can be made relatively small in the vicinity of the air outlet port connecting to the cylinder having a relatively large residual gas amount. Thereby, inflow of the oil is permitted to the cylinder in which the residual gas amount is relatively small, while inflow of the oil to the cylinder in which the residual gas amount is relatively large can be suppressed. Therefore, abnormal combustion can be prevented from unduly occurring to a specific cylinder, and the probability of occurrence of abnormal combustion as the entire internal combustion engine can be suppressed to be low.

### Others

The embodiments of the present invention are described above, but the present invention is not limited to the aforementioned embodiments, and can be carried out by being variously modified within the range without departing from the gist of the present invention. For example, the internal combustion engine of each of the embodiments is an in-line engine, but the present invention is also applicable to a V-engine. Further, the present invention is applicable to any of a V-engine of a type including surge tanks at respective left and right banks, and a V-engine of a type of sharing one surge tank by the left and right banks.

Further, in each of the embodiments, the amounts of the oil accumulating in the vicinities of the air outlet ports are regulated according to the depth of the bottom portion of the surge tank, but the amounts of the accumulating oil may be regulated according to the breadth of the bottom portion of the surge tank.

Further, in embodiment 1, as the matter which significantly influences the in-cylinder wall surface temperature, the flowing direction of the cooling water is cited, but if the element other than the flowing direction of the cooling water is more dominant in the difference in the in-cylinder wall surface temperature among the cylinders, the shape of the surge tank may be determined with the element taken into consideration. In embodiment 2, as the matter which significantly influences the residual gas amount, back pressure is cited, but if the element other than the back pressure is more dominant in the difference among the cylinders in the residual gas amount, the shape of the surge tank may be determined with the element taken into consideration.

### Description of Reference Numerals

- 2, 32: Cylinder head
- 4, 34: Surge tank
- 6, 36: Intake branch pipe
- 8A, 8B, 8C, 8D, 38A, 38B, 38C, 38D: Air outlet port
- 10, 40: Surge tank bottom portion
- 20: Turbo super charger
- 22, 24: Exhaust system

## Claims

1. An internal combustion engine, comprising:
a plurality of cylinders having a difference in in-cylinder wall surface temperatures among the cylinders; and
a surge tank having a plurality of air outlet ports connecting to the respective cylinders,
wherein the surge tank is formed so that relatively much oil accumulates in a vicinity of an air outlet port connecting to a cylinder in which an in-cylinder wall surface temperature is relatively low, and accumulation of the oil is relatively small in a vicinity of an air outlet port connecting to a cylinder in which an in-cylinder wall surface temperature is relatively high.

2. An internal combustion engine, comprising:
a plurality of cylinders disposed along a flow of cooling water; and
a surge tank having a plurality of air outlet ports connecting to the respective cylinders,
wherein the surge tank is formed so that relatively much oil accumulates in a vicinity of an air outlet port connecting to a cylinder located at an upstream side of the flow of the cooling water, and accumulation of the oil is relatively small in a vicinity of an air outlet port connecting to a cylinder located at a downstream side of the flow of the cooling water.

3. An internal combustion engine, comprising:
a plurality of cylinders with a difference occurring in residual gas amounts among the cylinders; and
a surge tank having a plurality of air outlet ports connecting to the respective cylinders,
wherein the surge tank is formed so that relatively much oil accumulates in a vicinity of an air outlet port connecting to a cylinder in which a residual gas amount is relatively small, and accumulation of the oil is relatively small in a vicinity of an air outlet port connecting to a cylinder in which a residual gas amount is relatively large.

4. An internal combustion engine, comprising:
a plurality of cylinders having a difference in back pressure among the cylinders; and
a surge tank having a plurality of air outlet ports connecting to the respective cylinders,
wherein the surge tank is formed so that relatively much oil accumulates in a vicinity of an air outlet port connecting to a cylinder in which back pressure is relatively low, and accumulation of oil is relatively small in a vicinity of an air outlet port connecting to a cylinder in which back pressure is relatively high.
